# EUROPEAN PATENT SPECIFICATION

(11) **EP 2 100 515 B1**
(45) Date of publication and mention of the grant of the patent: **02.03.2011**
(21) Application number: 08425154.5
(22) Date of filing: 12.03.2008
(51) Int. Cl.: A23G 3/22, A23G 9/24, A23P 1/08

(54) **Enrober machine**
Überziehmaschine
Machine à enrober

(43) Date of publication of application: 16.09.2009
(73) Proprietor: Soremartec S.A., 6700 Arlon (BE); Ferrero S.p.A., 12051 Alba (Cuneo) (IT); Ferrero Offene Handelsgesellschaft m.b.H., 60599 Frankurt am Main (DE)
(72) Inventor: Catalano, Giorgio, 35279 Neustadt (DE); Goerge, Franz-Josef, 35274 Kirchhain (DE); Stork, Winfried, 35287 Amoeneburg (DE)
(74) Representative: Bosotti, Luciano

(56) References cited:
- EP-A- 1 673 979
- WO-A-02/41715
- GB-A- 296 704
- US-A- 5 403 396

## Description

### Field of the invention

The present description refers to enrobing machines.

By enrobing machine or, simply enrober (enrobatrice; machine à enrober or enrobeuse; Ueberziehmaschine) it is intended a machine usable for coating food products - such as, for example sweets - with a coating layer of food material such as, for example, chocolate, possibly with the addition of hazelnut granules or similar granular materials.

### Description of the related art

In the employment of enrobing machines, the need may arise for the successive treatment of different lots of products destined to be coated with different coating materials. When the coating material is changed, it is usually desirable to do this so that the coating material for the products in the "new" lot is not contaminated by traces of the coating material used for the "old" lot, that is, for the lot of products previously coated: in this regard it is sufficient to consider the case in which the shift is made from a dark chocolate coating to a white chocolate coating.

The possibility of contamination evidently derives from the fact that, when the processing of a lot of products "enrobed" with a certain coating material ends, both the distributing group of the coating veil, and the conveyor transporting the products to be coated through the coating veil, and also (and above all) the basin in which the coating material not deposited on the products is collected, contain certain quantities of the above-said coating material.

To overcome this inconvenience (and as is illustrated in the document EP-A-1 673 979, used as a model for claim 1), the solution has already been proposed of realising an enrobing machine so that, when the coating material is changed, the parts of the enrober destined to make contact with such material are subjected to a washing operation destined to clean the residual coating material of the previous lot from such parts.

This solution is not particularly advantageous, for various reasons.

First of all, the structure of the enrober is made much more complex due to the presence of the system for washing and evacuation of washing residues.

Secondly, the time dedicated to performing the washing operation (which usually also requires a successive drying operation) constitutes a "dead time" for the productive cycle.

Also, the traces of coating material removed with the washing operation are usually destined to the waste, since it is quite complicated to separate them from the washing fluid.

Also, there are doubts, in general, concerning the risk of biological contamination connected with the humid washing, as is expressed, for example, in the document US-A-5 403 396. The latter document suggests duplicating a good part of the structure of the enrobing machine, providing distinct treating units for each coating material.

One realises immediately that this solution is difficult to propose in the case in which more than two coating materials are used, unless willing to accept a very complex enrobing machine.

Even in the case of only two coating materials, the overall bulk of the machine is increased in an undesirable way with respect to the bulk of the enrobing machine or line destined to operate with a single coating material.

### Object and summary of the invention

From the previous discussion, the need is clear for a perfected enrobing machine that can selectively operate with multiple coating materials (at least two different ones) without penalising the productive cycle, and without for this reason providing a machine structure of prohibitive complexity and bulk, mainly in the case in which it is operated at the level of the retrofitting of a pre-existing enrobing line.

The present invention has the object of providing an enrobing machine able to fulfil such needs.

According to the invention, such object is achieved by means of an enrobing machine having the characteristics recalled in the claims.

The claims form an integral part of the technical disclosure of the invention as provided herein.

### Brief description of the annexed drawings

The invention will now be described by way of nonlimiting example with reference to the annexed drawings wherein:
- figure 1 is a general view in prospective of a machine of the type described herein,
- figure 2 illustrates one of the parts of the machine in figure 1 in greater detail,
- figures 3 to 7 are representative of the sequence of operations performed with the purpose of shifting from one coating material to another in an enrobing machine of the type described herein, and
- figure 8 refers to a possible variant embodiment.

### Detailed description of exemplary embodiments

In the following description, numerous specific details are given to provide a thorough understanding of embodiments. The embodiments can be practiced without one or more of the specific details, or with other methods, components, materials, etc. In other instances, well known structures, materials, or operations are not shown or described in detail to avoid obscuring aspects of the embodiments.

Reference throughout this specification to "one embodiment" or "an embodiment" means that a particular feature, structure, of characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

In the figures of the annexed drawings, the reference 10 indicates an enrobing machine in its entirety susceptible of being used, for example, to deposit a coating layer of food material, for example chocolate-based (possibly with additions of granular material such as hazelnut granules and the like) onto food products P constituted, also by way of example, by pralines or similar products. The nature and characteristics of the products P, as well as the nature and characteristics of the material used for the coating ("enrobing") of the same are not themselves relevant for the purpose of understanding and implementing the solution described herein.

According to a feature itself known in the art, the enrobing machine 10 includes (at least) one group 12 for the delivery and distribution of the coating material.

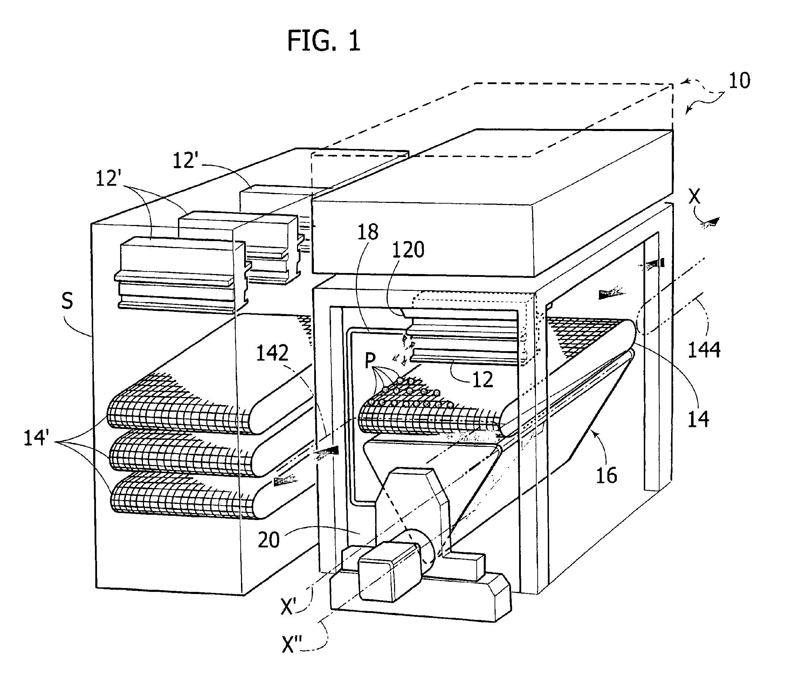

In one embodiment, the delivery group 12 includes an elongated linear-shaped delivering mouth or (or possibly, a linear array of aligned nozzles) oriented in a direction generically orthogonal with respect to the advancing direction of the products P indicated with X; the delivering mouth of the delivery group 12 is destined to provide a cascade or flow of coating material for the products P such as, for example, chocolate. In one embodiment, the flow of coating material is in the form of a veil or continuous curtain traversed by the flux of products P advancing horizontally underneath in the direction indicated by arrow X in figure 1.

In one embodiment, as is indicated in Figure 1 by two double arrows orthogonal to each other, the deliver group 12 is provided so to be vertically mobile (for example, for regulating purposes) and/or horizontally (for regulating purposes and/or to produce a cyclic movement of "chasing" the products P).

The advancing movement of the products P is insured by a conveyor group 14 constituted, for example, by a motorised loop conveyor with an especially open structure, for example net-like. The openings or mesh of such net-like structure form respective receiving sites for the products P during the advancing motion imparted to them by the conveyor 14 in the direction X, from left to right with reference to the observation point in the figures.

In this way the products are found traversing the veil of food product falling from the nozzles of the delivery group 12 so to be coated ("enrobed") with such coating material at least on their upper portion.

Within the conveyor group 14, a lower roller can also be provided with the function of distributing the coating material on the lower part (base) of the products P subjected to enrobing.

The coating material projected downward by the delivery group 12 that does not deposit on the product P but instead falls or drops down through the openings in the net of the conveyor 14, is collected in a basin on whose bottom an uptake conduit 18 acts, to which a circulation pump 20 is interposed. The pump 20 provides for the returning of the over-sprayed material collected in the basin toward the delivering group 12 according to a general scheme of coating material recirculation.

Alternatively, according to a different flow principle, the pump 20 provides for the returning of said coating material accumulated in the basing 16, first through a filter separating it from possible impurities absorbed during the enrobing phase, then towards the depot container (not illustrated). In this situation, the recycled coating material is reheated in the depot and then sent to the tempering unit and successively to the delivery group 12.

In both of the above-cited hypotheses, the basin is provided with a level indicator (not illustrated) providing for the actuation of the sending pump of the tempering unit to reintegrate material when the level goes below a certain value, or to arrest the sending pump of the tempering unit when the level goes above a certain established value, to avoid risks of overflowing of the material from the hopper (ex. in case of breakdown or malfunctioning of the pump 20).

The structure described so far and the relative functioning modes are considered to be definitely known in the art (for example, in the documents cited in the introductory part of the present application) and therefore, as such not requiring a detailed description herein. This is valid also concerning the possible presence of accessory elements, such as, for example: thermal conditioning elements (heat the circulating coating material, tempering of such material, cooling of the enrobed products, to facilitate the consolidation of the enrobing, ...), fan groups to stabilise the veil of coating material, according to the desired thickness and so on.

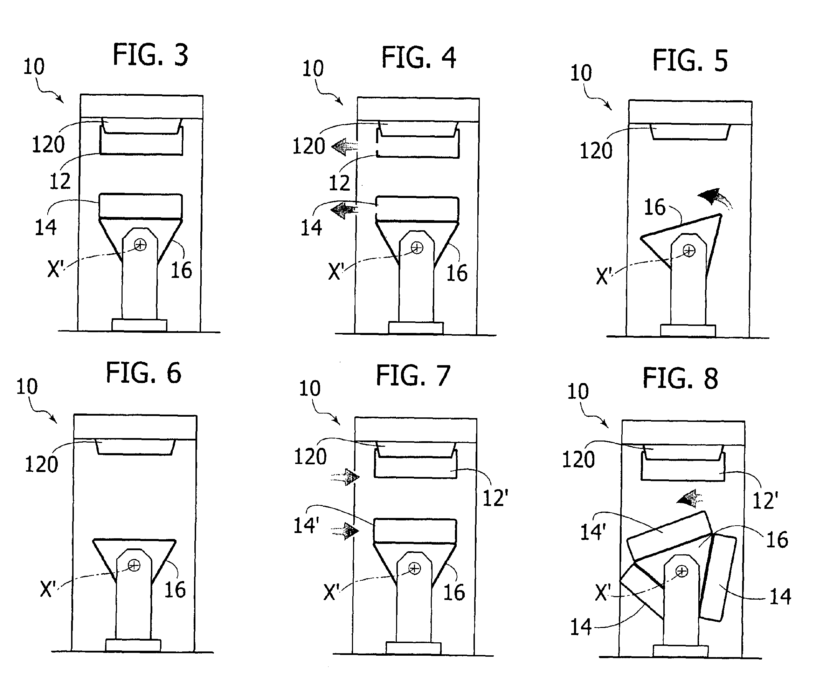

In the exemplary embodiment illustrated herein, the group 12 delivering the coating material is mounted on a respective supporting structure 120 (corresponding to a recirculation conduit 18 in which the pump 20 acts) according to ways allowing the delivering group 12 to be easily removed by extracting it from the structure of the machine 10 and to be substituted with homologous elements indicated with 12', as can be deduced from the sequence in figures 3-7.

In the embodiment illustrated herein, the sliding movement which allows the insertion and extraction of the single delivering group 12 into and from the machine 10 occurs in a horizontal direction along an axis generically oriented transversally with respect to the advancing direction X of the products P which are subjected to enrobing.

According to the currently preferred embodiment, the above said translation and substitution movement can be performed with the manual intervention of a dedicated operator. However, such movement can at least in part be assisted, with the view of performing it semi-automatically or automatically, by a linear actuator (not illustrated, but of easily comprehensible configuration), which, for example:
- moves the previously used delivering group 12, destined to be substituted, since it is contaminated by the coating material used, pushing it out of the machine 10 form one side of the same, as is schematically represented in figure 4, and
- withdraws a delivering group 12' destined to be used for a new sequence of enrobing operations performed with a new coating material, different from the previous one, for example from a cabinet or collecting scaffolding S located next to the machine 10 (see figure 1), inserting it in the relative supporting structure 120 as is schematically represented in figure 7.

The delivering group 12 extracted from the machine 10 can be sent to a washing cycle, so that once cleaned it can be inserted into the cabinet or scaffolding S to be withdrawn again in the way described previously. All of this without negatively effecting the efficiency of the work cycle: in fact, the delivering group 12 can be subjected to washing outside of the line while the machine 10 is currently working, without causing dead time.

In one embodiment, provision is made for the coating material to be fed to the deliverer through distinct conduits (tubings) for each different type of coating material: for example, in the case of three different coating materials (such as light chocolate, dark chocolate and white chocolate), three sending conduits of the deliverer 12 can be provided, therefore, the number of sending conduits being equal to the number of deliverers 12 of which alternation is provided for according to the substitution mechanism described herein.

Usually, substitution of the deliverer 12 also involves substitution of the terminal part of the sending tubing.

It will also be appreciated that the solution of proceeding to the washing of the deliverer 12 extracted from the machine 10 in with the view of its insertion into the cabinet or scaffolding S, even though preferred at the moment, is not imperative. In fact, the deliverer 12 "contaminated" by a first coating material can be extracted from the machine 10 and be simply inserted in the cabinet or scaffolding S to be again withdrawn and inserted into the machine 10 when the machine 10 itself is reconfigured to work again with the same coating material.

Substantially analogous substitution modes are provided for the conveyor group 14, which itself can be extracted from the structure of the machine 10 so to be substituted by a homologous element indicated with 14', as can be deduced from the sequence in figures 3 to 7.

In the embodiment illustrated herein, the sliding movement allowing the insertion and extraction of the single conveyor group 14 into and out of the machine 10 occurs in a horizontal direction along an axis generically oriented transversally with respect to the advancing direction X of the products P that are subjected to enrobing.

Also in this case, the above-said translation and substitution movement can be actuated with the manual intervention of a dedicated operator, or be at least in part assisted with the view of performing it semi-automatically or automatically by a linear actuator (not illustrated but of easily comprehensible configuration) which, for example:
- moves the conveyor group 14 used up until that moment and destined to be substituted since "contaminated" by the coating material used up until that moment, pushing it outside of the machine 10 for one side of the same, as is schematically represented in figure 4, and
- withdraws, for example from the cabinet or scaffolding S, a conveyor group 14' destined to be used for a new sequence of enrobing operations actuated with a new coating material, inserting it in the machine as is schematically represented in figure 7.

As in the case of the delivering group 12, the conveyor group 14 extracted from the machine can be sent to a washing cycle, so that, once cleaned, it can be inserted in the cabinet or scaffolding S to be withdrawn again from it in the manner described previously. All of this without negatively affecting the efficiency of the work cycle: in fact, the conveyor 14 can be subjected to washing outside the line, while the machine 10 is currently working, without causing dead time.

Also the solution of proceeding to the washing of the conveyor 14 extracted from the machine 10 with the view of inserting it in the cabinet or scaffolding S, although preferred at the moment, is not imperative. In fact, the conveyor 14 "contaminated" by a first coating material can be extracted from the machine 10 and simply inserted in the cabinet or scaffolding S. This to be withdrawn again and inserted in the machine 10 if and when the machine 10 itself is reconfigured to work again with the same coating material.

To minimise bulk, the cabinet or scaffolding S usually includes multiple shelves to receive multiple conveyor groups, placed one above the other.

Given that the single conveyor group 14 can have relevant dimensions and weight, the above-said shelves of the cabinet or scaffolding S can be motorised to allow the raising and lowering of the single group 14 to the height of insertion in the machine.

In one embodiment, the above-said "shelves" include pairs of lateral sleds that allow exploitation of the vertical mobility of the above-said shelves, to:
- slide a conveyor group 14 that is extracted from the machine 10 laterally, orthogonally with respect to the advancing axis X of the products P and in a horizontal direction,
- vertically move the shelves of the cabinet or scaffolding S so to move the above-said conveyor group 14 away and to bring the substituting conveyor group 14' to the height of insertion in the machine 10, and
- slide a conveyor group 14' to be inserted into the machine 10 laterally, orthogonally with respect to the advancing axis X of the products P and in a horizontal direction.

An analogous solution can be adopted also for the distributor groups 12.

It will also be appreciated that, at least in some embodiments, the structure or structures S (previously called cabinet or scaffolding) for the collection of the distributors 12 and of the conveyors 14 do not necessarily need to be fixed structures associated with the machine 10. In fact, such collecting structures can be mobile structures that are brought closer to the machine 10 only when it is necessary to proceed with the substitution of the delivery group 12 and/or the conveyor group 14, during the temporary interruption of the working cycle, therefore without causing a fixed occupation of space, destined to remain in time.

It will also be appreciated that, both for the delivery group 12, and the conveyor group 14, the extracted group (12, 14) and the substituting group (12', 14') inserted in its place can be - respectively - extracted from the machine 10 and inserted in the machine 10 itself both acting on the same side, (as in the example to which figures 3 to 7 refer), or acting on opposite sides.

With the aim of facilitating the lateral translational movement of the conveyor group (whether for the conveyor group 14 extracted from the machine 10, or for the substituting group 14' inserted in its place in the same machine 10) it can be foreseen that one or both of the conveyors 142 and 144, respectively having the function of feeding the products for enrobing onto and withdrawing the enrobed products from the conveyor 14, present a certain retracting capacity, that is, of moving away from the conveyor 14.

All of this as is schematically represented with broken lines and by the double arrow shown in figure 1. In this way - even when under normal functioning conditions one or both of the conveyors 142, 144 are very close to the extremity curving sections of the conveyor 14 (as occurs in the case of machines destined to work on very small products P) - the movement of extraction/insertion of the conveyor groups 14, 14' with respect to the machine 10 can occur without risks of interference after having moved one or both of the conveyors 142, 144 away from the conveyor 14.

For the same reason, it can also be foreseen that the upper part of the machine 10 be raised or lifted by a certain entity (see the representation in broken lines in Figure 1), for example, with a lifting stroke of 100 mm. Such lifting movement can also be aimed at facilitating the substitution of the deliverer 12.

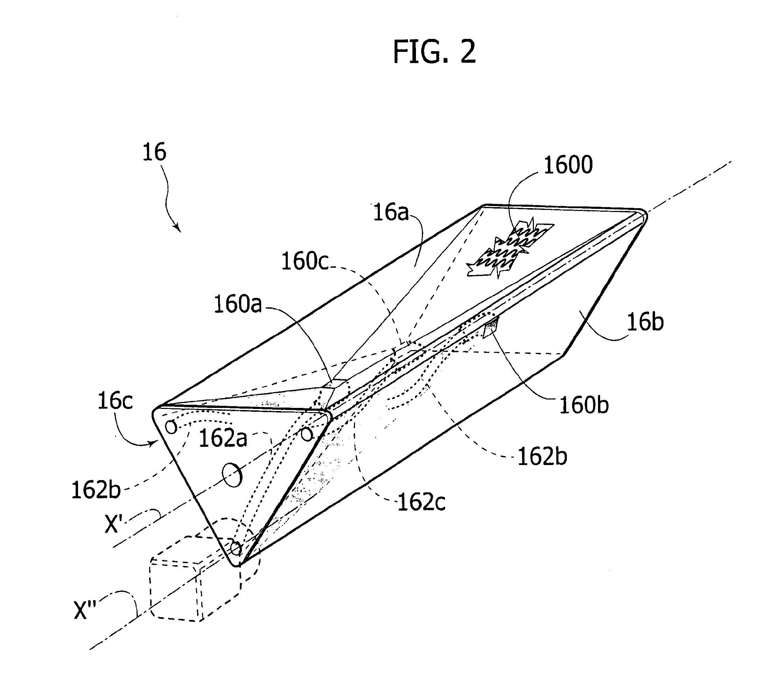

As is better illustrated in figure 2, for the collecting basin destined to be located in a collecting position under the conveyor group 14, the solution described herein provides for recourse to a rotating carousel (or "revolver") that is, a structure 16 including a plurality of basins 16a, 16b, 16c, mounted on a structure that rotates around an axis X' as is illustrated in figure 5.

In the exemplary embodiment illustrated herein, the axis X' is a horizontal axis oriented in the advancing direction X of the products P.

In general, the carousel-like structure 16 can include as many basins 16a, 16b, 16c as there are different coating materials with which it is expected that the machine 10 is destined to operate. The drawings annexed herein refer to an exemplary embodiment wherein the machine 10 is destined to operate with three different coating materials (by way of example: bitter or dark chocolate, milk or light chocolate, white chocolate), for which three basins are present 16a, 16b, 16c each of which occupies, with reference to the rotation axis X' an angular extension equal to 120°.

In one embodiment wherein the machine 10 is destined, for example, to operate with four different coating materials, four different basins could be provided, each of them extending for a 90° angle around the rotation axis X' of the carousel-like structure.

In general, in the case of a machine 10 destined to operate with n different coating materials, n basins could be provided, each with an angular extension of 360/n° around the axis X'. Even if the number of coating materials (and therefore of basins) can be any, increasing the number of basins implies an increase in the dimensions of the carousel-like structure 16, with consequent increasing of the dimensions of the machine 10 in its entirety.

In the exemplary embodiment illustrated herein, each of the basins 16a, 16b, 16c has a rectangular based pyramidal shape (naturally convex) usually asymmetric. All of this so that the basins in question present respective discharge mouths 160a, 160b, 160c arranged in positions out of phase along the axis X'.

Independent respective discharge conduits 162a, 162b, 162c for each basin correspond to the discharge mouths 160a, 160b, 160c, allowing the return of the material withdrawn from the basin toward the pump 20.

The drawings refer in particular to an embodiment wherein each of the discharge conduits 162a, 162b and 162c extends from a "proximal" extremity connected to the respective discharge mouth 160a, 160b, 160c towards a "distal" extremity located in correspondence to a corner edge of the rotating structure 16 approximately diametrically opposed with respect to the corresponding discharge mouth.

In this way, when a determined basin 16a, 16b, 16c is facing upward in employment position, the relative discharge conduit 162a, 162b and 162c is found with its distal extremity extending along an axis X" parallel to the axis X' but located in the portion of the rotating structure 16 that is found lower at the moment. In this way, the flux of the coating material away is facilitated by gravity starting from the respective discharge mouth 160a, 160b, 160c.

As is better visible in Figure 2, instead of being located in central axial position with respect to the structure 16 (that is, in correspondence to the axis X'), the pump 20 is preferably aligned with the axis X" previously cited. In this way, the rotation of the structure 16 around the axis X' to selectively bring one of the basins 16a, 16b, 16c into employment position, facing upward, will have the effect of bringing the distal extremity of the relative discharge conduit 162a, 162b and 162c in position aligned with the pump 20, which remains in position while the structure 16 rotates around the axis X'.

The reference 1600 appearing in figure 2 indicates the possibility of foreseeing thermal conditioning elements for the basin 16a, 16b, 16c. In one embodiment, such elements operate independently on the basins 16a, 16b, 16c. The presence of such elements (usually thermal electric heating elements, for example resistance-type) allows, for example, to independently regulate the temperature of the basin used from time to time. In one embodiment, the heating elements 1660 are in the form of thermal electric plates.

The observation of the sequence in the figures 3 to 7 makes it easy to understand that in the solution described herein, the substitution of the "old" delivering group 12 and conveyor group 14, with a "new" delivering group 12' and conveyor group 14', can be accompanied with the rotation of the carousel or revolver-like structure 16 (see mainly figure 5), hand commanded by a worker or realised through a motorisation, destined to bring underneath the conveyor 14, in position for collecting the coating material falling downward from the conveyor group 14 itself, a basin which i) has itself been cleaned and/or ii) is in any case destined to the collection of one and only one type of coating material.

Therefore, with a carousel of more than one basin, the solution just described allows each enrobing operation with a respective material to be performed using a basin chosen from among the plurality of basins available 16a, 16b, 16c. Therefore, the basin used from time to time does not need to be a basin - absolutely - clean: in fact, the rotation allows the use of a basin in which residue of the coating materials of the previous operation are possibly present, provided that such residues are of the same material destined to be used for the next enrobing cycle, thus avoiding contamination between different coating materials.

However, when the carousel-like structure 16 is rotated, orienting upward the basin corresponding to the coating material destined to be used for the next enrobing cycle and turning over in lateral or lower position the basin previously used, it is usually provided for the previously used basin to be subjected to cleaning operations, at least approximately, for example, through scraping with a racle or similar instruments to avoid that excessive quantities of residual coating material remain.

For the purpose of allowing more complete cleaning, it is also possible to provide for the structure 16 to be extractable from the machine 10 sliding it axially along the axis X'.

An alternative embodiment, to which only figure 8 schematically refers, provides for the substitution of the conveyor 14 "contaminated" with a coating material with a new conveyor to be used with a different coating material, occurring not by the extraction/insertion mechanism described previously, but associating to each of the basins 16a, 16b, 16c a respective conveyor 14, 14', 14''.

The alternative embodiment to which figure 8 refers provides recourse to a carousel-like structure 16 including, united with the basins 16a, 16b, 16c a corresponding plurality of conveyors 14, 14', 14" each located above one of the basins 16a, 16b, 16c in the structure rotating around the axis X'.

Therefore, the carousel-like structure 16 will include as many conveyors 14, 14', 14" each mounted on a corresponding basin 16a, 16b, 16c, as there are different coating materials with which the machine 10 is expected to be destined to operate. For consistency with the other drawings, figure 8 refers to an exemplary embodiment in which the machine 10 is destined to operate with three different coating materials (by way of example: bitter or dark chocolate, milk or light chocolate, white chocolate), for which there are three conveyors 14, 14', 14" and three basins 16a, 16b, 16c with each basin/conveyor complex occupying, with reference to the rotation axis X', an angular extension equal to 120°. In general, in the case of a machine 10 destined to operate with n different coating materials, n basins could be provided, each with an angular extension of 360/n° around the axis X', each with a respective associated conveyor, therefore with the presence of n conveyors mounted on the structure 16.

In the alternative embodiment to which figure 8 refers, wherein the substitution of the conveyor 14 and of the basin 16 occurs through the revolver-like turning of the entire structure, the separation of the two structures (basin 16 and conveyor 14) can be foreseen before proceeding to the scraping and/or washing operations.

Also, in the embodiment to which figure 8 refers, it can be foreseen that one or both of the conveyors 142 and 144 having the functions of feeding the products P to be enrobed onto the conveyor 14 and the withdrawing from the conveyor 14 of the enrobed products, respectively, present a certain capacity for being backed away, that is, moved away, from the conveyor 14 (see the broken lines and the double arrows shown in figure 1). Analogously, also in the embodiment to which figure 8 refers, it can be foreseen that the upper part of machine 10 can be raised or lifted by a certain entity. This always for the purpose of not interfering with the movement of the conveyor groups in alternation along the product transport pathway by effect of the rotation of the carousel-like structure 16 (and/or possibly to facilitate the substitution of the deliverer 12).

Also in the embodiment to which figure 8 refers, it is possible to provide for the structure 16 to be extractable from the machine 10, sliding it axially along the axis X'.

Regardless of the specific embodiment adopted, when an enrobing phase with a determined coating material is completed, it can be provided that the pump 20 (and the recirculation circuit of the coating material associated with it) be commanded to empty the basin 16a, 16b, 16c currently in use, the corresponding discharge conduit 162a, 162b, 162c, as well as the section of the conduit 18 returning the coating material from the pump 20 toward the delivery group 12.

For the same reason, the substitution of the delivery group 12 may not be imperative under some conditions of employment.

In one embodiment (not imperative) the pump 20 is itself realised so to be removable with respect to the machine 10. Consequently, the operation of substituting a pump 20 contaminated by traces of the previously used coating material with a clean pump can be associated with the substitution of the delivery and the conveyor groups (12, 14) and with the rotation of the carousel-like structure 16.

Naturally, without prejudice to the underlying principle of the invention, the details and the embodiments may vary, even appreciably, with reference to what has been described herein by way of example only, without departing from the scope of the invention as defined by the annexed claims.

## Claims

1. An enrobing machine (10) including:
- a delivery group (12) to deliver a flow of coating material onto the products (P) to be enrobed,
- a conveyor group (14) with an open structure to advance the products (P) to be enrobed in said flow of coating material, and
- at least one basin (16) locatable in a collecting position to collect the coating material falling down from the conveyor,
**characterised in that** a carousel-like structure (16) including a plurality of basins (16a, 16b, 16c) is provided, said carousel-like structure (16) being selectively rotatable to selectively bring one basin of said plurality (16a, 16b, 16c) into said collecting position to collect a respective coating material.

2. An enrobing machine according to claim 1, wherein said carousel-like structure (16) is rotatable around an axis (X') parallel to the advancing direction (X) of said products (P) on said conveyor group (14).

3. An enrobing machine according to any of the previous claims 1 or 2, wherein said carousel-like structure (16) is rotatable around a rotation axis (X') and the basins (16a, 16b, 16c) included in said carousel-like structure have respective discharge openings (160a, 160b, 160c) staggered along said rotation axis (X').

4. An enrobing machine according to any of the previous claims, wherein the basins (16a, 16b, 16c) in said carousel-like structure 16 are equipped with independent respective discharge conduits (162a, 162b, 162c) for each basin.

5. An enrobing machine according to any of the previous claims, including, a coating material recirculating pump (20), mounted on said carousel-like structure (16), said pump (20) being selectively removable with respect to said carousel-like structure 16 to allow the extraction from the machine (10) of a pump (20) used with a first coating material and the insertion into the machine (10) of a pump (20) usable with a second coating material, different from said first coating material.

6. An enrobing machine according to any of the previous claims, wherein at least one between said delivery group (12) and said conveyor group (14) is mounted on said machine (10) in a removable way to allow the substitution of a delivery group (12) and/or of a conveyor group (14) used for a first coating material with a delivery group (12') and/or a conveyor group (14') usable with a second coating material, different from said first coating material.

7. An enrobing machine according to claim 6, associated with at least one collecting structure (S) for the delivery groups (12') and/or conveyor groups (14') to be inserted into said machine (10).

8. An enrobing machine according to claim 7, wherein said at least one collecting structure (S) is movable with respect to said machine (10).

9. An enrobing machine according to any of the claims 1 to 5, wherein to said plurality of basins (16a, 16b, 16c) respective conveyor groups (14, 14', 14") are associated to advance the products (P) to be enrobed in said flow of coating material, said conveyor groups (14, 14', 14") being mounted on said carousel-like structure (16) so that the selective rotation of said carousel-like structure (16) determines the substitution of a conveyor group (14) used for a first coating material with a conveyor group (14') usable with a second coating material, different from said first coating material.

10. An enrobing machine according to any of the claims 6 or 9, the machine being associated with a feeding group (142) of the products (P) to be enrobed and a withdrawing group (144) of the enrobed products (P), and wherein at least one between said feeding group (142) and said withdrawing group (144) can be selectively moved away from the machine to allow the substitution of a conveyor group (14) used for a first coating material with a conveyor group (14') usable with a second coating material, different from said first coating material.

11. An enrobing machine according to any of the claims 6, 9 or 10, wherein the upper part of the machine (10) is selectively raise-able to allow the substitution of a delivery group (12) and/or of a conveyor group (14) used for a first coating material with a delivery group (12') and/or a conveyor group (14') useable with a second coating material, different from said first coating material.

12. An enrobing machine according to any of the previous claims, wherein said delivery group (12) is selectively movable in height and/or horizontally.

13. An enrobing machine according to any of the previous claims, wherein said carousel-like structure (16) carries thermal conditioning elements (1600) for said plurality of basins (16a, 16b, 16c).

14. An enrobing machine according to claim 13, wherein said thermal conditioning elements (1600) operate independently on the basins (16a, 16b, 16c) of said plurality.

15. An enrobing machine according to any of the previous claims 13 or 14, wherein said thermal conditioning elements (1600) are thermoelectric elements.

## Patentansprüche

1. Überziehmaschine (10) mit:
- einer Abgabegruppe (12) zum Abgeben eines Flusses aus Beschichtungsmaterial auf die zu überziehenden Produkte (P);
- einer Beförderungsgruppe (14) mit einer offenen Struktur, um die zu überziehenden Produkte (P) in dem Fluss aus Beschichtungsmaterial voranzubewegen, und
- wenigstens einem Becken (16), das in einer Auffangposition angeordnet werden kann, um das Beschichtungsmaterial, das von dem Beförderer herabfällt, aufzufangen,
**dadurch gekennzeichnet, dass** eine Karussell-ähnliche Struktur (16) mit mehreren Becken (16a, 16b, 16c) vorgesehen ist, wobei die Karussell-ähnliche Struktur (16) selektiv drehbar ist, um selektiv ein Becken der mehreren (16a, 16b, 16c) in die Auffangposition zu bringen, um ein jeweiliges Beschichtungsmaterial aufzufangen.

2. Überziehmaschine nach Anspruch 1, wobei die Karussell-ähnliche Struktur (16) um eine Achse (X') drehbar ist, die parallel zu der Voranbewegungsrichtung (X) der Produkte (P) auf der Beförderungsgruppe (14) ist.

3. Überziehmaschine nach einem der vorherigen Ansprüche 1 oder 2, wobei die Karussell-ähnliche Struktur (16) um eine Drehachse (X') drehbar ist und die Becken (16a, 16b, 16c), die in der Karussell-ähnlichen Struktur vorhanden sind, jeweilige Auslassöffnungen (160a, 160b, 160c) aufweisen, die entlang der Drehachse (X') versetzt angeordnet sind.

4. Überziehmaschine nach einem der vorherigen Ansprüche, wobei die Becken (16a, 16b, 16c) in der Karussell-ähnlichen Struktur (16) mit jeweiligen unabhängigen Auslassrohren (162a, 162b, 162c) für jedes Becken versehen sind.

5. Überziehmaschine nach einem der vorherigen Ansprüche mit einer Beschichtungsmaterialrezirkulationspumpe (20), die auf der Karussell-ähnlichen Struktur (16) angebracht ist, wobei die Pumpe (20) selektiv entfernbar bezüglich der Karussell-ähnlichen Struktur (16) ist, um das Entfernen einer Pumpe (20), die mit einem ersten Beschichtungsmaterial benutzt wurde, aus der Maschine (10) und das Einfügen in die Maschine (10) einer Pumpe (20), die mit einem zweiten Beschichtungsmaterial, das von dem ersten Beschichtungsmaterial verschieden ist, benutzbar ist, zu ermöglichen.

6. Überziehmaschine nach einem der vorherigen Ansprüche, wobei die Abgabegruppe (12) und/oder die Beförderungsgruppe (14) auf der Maschine (10) in einer entfernbaren Art angebracht ist, um das Ersetzen einer Abgabegruppe (12) und/oder einer Beförderungsgruppe (14), die für ein erstes Beschichtungsmaterial benutzt wurden, durch eine Abgabegruppe (12') und/oder eine Beförderungsgruppe (14'), die mit einem zweiten Beschichtungsmaterial, das von dem ersten Beschichtungsmaterial verschieden ist, benutzbar sind, zu ermöglichen.

7. Überziehmaschine nach Anspruch 6, die mit wenigstens einer Auffangstruktur (S) für die Abgabegruppen (12') und/oder die Beförderungsgruppen (14'), die in die Maschine (10) einzusetzen sind, versehen ist.

8. Überziehmaschine nach Anspruch 7, wobei die wenigstens eine Auffangstruktur (S) bezüglich der Maschine (10) beweglich ist.

9. Überziehmaschine nach einem der Ansprüche 1 bis 5, wobei den mehreren Becken (16a, 16b, 16c) jeweilige Beförderungsgruppen (14, 14', 14") zugeordnet sind, um die zu überziehenden Produkte (P) in den Fluss aus Beschichtungsmaterials voranzubewegen, wobei die Zuführgruppen (14, 14', 14") auf der Karussell-ähnlichen Struktur (16) so angeordnet sind, dass die selektive Drehung der Karussell-ähnlichen Struktur (16) die Ersetzung einer Beförderungsgruppe (14), die für ein erstes Beschichtungsmaterial benutzt wurde, durch eine Beförderungsgruppe (14'), die mit einem zweiten Beschichtungsmaterial benutzbar ist, das von dem ersten Beschichtungsmaterial verschieden ist, bestimmt.

10. Überziehmaschine nach einem der Ansprüche 6 oder 9, wobei die Maschine mit einer Einführgruppe (142) der zu überziehenden Produkte (P) und einer Ausführgruppe (144) der überzogenen Produkte (P) versehen ist, und wobei die Einführgruppe (142) und/oder die Ausführgruppe (144) selektiv von der Maschine weg bewegt werden können, um das Ersetzen einer Beförderungsgruppe (14), die für ein erstes Beschichtungsmaterial benutzt wurde, durch eine Beförderungsgruppe (14'), die mit einem zweiten Beschichtungsmaterial, das von dem ersten Beschichtungsmaterial verschieden ist, benutzbar ist, zu ermöglichen.

11. Überziehmaschine nach einem der Ansprüche 6, 9 oder 10, wobei der obere Teil der Maschine (10) selektiv anhebbar ist, um das Ersetzen einer Abgabegruppe (12) und/oder einer Beförderungsgruppe (14), die mit einem ersten Beschichtungsmaterial benutzt wurde, durch eine Abgabegruppe (12') und/oder eine Beförderungsgruppe (14'), die mit einem zweiten Beschichtungsmaterial, das von dem ersten Beschichtungsmaterial verschieden ist, benutzbar ist, zu ermöglichen.

12. Überziehmaschine nach einem der vorherigen Ansprüche, wobei die Abgabegruppe (12) selektiv in der Höhe und/oder horizontal bewegbar ist.

13. Überziehmaschine nach einem der vorherigen Ansprüche, wobei die Karussell-ähnliche Struktur (16) thermische Konditionierungselemente (1600) für die mehreren Becken (16a, 16b, 16c) trägt.

14. Überziehmaschine nach Anspruch 13, wobei die thermischen Konditionierungselemente (1600) unabhängig von den mehreren Becken (16a, 16b, 16c) funktionieren.

15. Überziehmaschine nach einem der vorherigen Ansprüche 13 oder 14, wobei die thermischen Konditionierungselemente (1600) thermoelektrische Elemente sind.

## Revendications

1. Machine à enrober (10) comprenant :
- un groupe de distribution (12) pour distribuer un flux de matière de revêtement sur les produits (P) à enrober,
- un groupe transporteur (14) ayant une structure ouverte pour faire progresser les produits (P) à enrober dans ledit flux de matière de revêtement, et
- au moins un bac (16) pouvant être situé dans une position de récupération pour récupérer la matière de revêtement tombant du transporteur,
**caractérisée en ce qu'**une structure de type carrousel (16) comprenant une pluralité de bacs (16a, 16b, 16c) est prévue, ladite structure de type carrousel (16) pouvant être tournée sélectivement pour amener sélectivement un bac de ladite pluralité (16a, 16b, 16c) dans ladite position de récupération pour récupérer une matière de revêtement respective.

2. Machine à enrober selon la revendication 1, dans laquelle ladite structure de type carrousel (16) est apte à tourner autour d'un axe (X') parallèle à la direction de progression (X) desdits produits (P) sur ledit groupe transporteur (14).

3. Machine à enrober selon l'une quelconque des revendications précédentes 1 ou 2, dans laquelle ladite structure de type carrousel (16) est apte à tourner autour d'un axe de rotation (X') et les bacs (16a, 16b, 16c) inclus dans ladite structure de type carrousel comportent des ouvertures de décharge respectives (160a, 160b, 160c) échelonnées le long dudit axe de rotation (X').

4. Machine à enrober selon l'une quelconque des revendications précédentes, dans laquelle les bacs (16a, 16b, 16c) dans ladite structure de type carrousel (16) sont équipés de conduits de décharge respectifs indépendants (162a, 162b, 162c) pour chaque bac.

5. Machine à enrober selon l'une quelconque des revendications précédentes, comprenant, une pompe de remise en circulation de matière de revêtement (20), montée sur ladite structure de type carrousel (16), ladite pompe (20) étant amovible sélectivement par rapport à ladite structure de type carrousel (16) afin de permettre l'extraction de la machine (10) d'une pompe (20) utilisée avec une première matière de revêtement et l'insertion dans la machine (10) d'une pompe (20) pouvant être utilisée avec une deuxième matière de revêtement, différente de ladite première matière de revêtement.

6. Machine à enrober selon l'une quelconque des revendications précédentes, dans laquelle au moins un groupe parmi ledit groupe de distribution (12) et ledit groupe transporteur (14) est monté sur ladite machine (10) de manière amovible afin de permettre de remplacer un groupe de distribution (12) et/ou un groupe transporteur (14) utilisé pour une première matière de revêtement par un groupe de distribution (12') et/ou un groupe transporteur (14') pouvant être utilisé avec une deuxième matière de revêtement, différente de ladite première matière de revêtement.

7. Machine à enrober selon la revendication 6, associée à au moins une structure de récupération (S) pour les groupes de distribution (12') et/ou les groupes transporteurs (14') devant être insérés dans ladite machine (10).

8. Machine à enrober selon la revendication 7, dans laquelle ladite au moins une structure de récupération (S) est mobile par rapport à ladite machine (10).

9. Machine à enrober selon l'une quelconque des revendications précédentes 1 à 5, dans laquelle à ladite pluralité de bacs (16a, 16b, 16c) sont associés des groupes transporteurs (14, 14', 14") respectifs pour faire progresser les produits (P) devant être enrobés dans ledit flux de matière de revêtement, lesdits groupes transporteurs (14, 14', 14") étant montés sur ladite structure de type carrousel (16) de manière que la sélection rotative de ladite structure de type carrousel (16) détermine le remplacement d'un groupe transporteur (14) utilisé pour une première matière de revêtement par un groupe transporteur (14') pouvant être utilisé avec une deuxième matière de revêtement, différente de ladite première matière de revêtement.

10. Machine à enrober selon l'une quelconque des revendications précédentes 6 ou 9, la machine étant associée à un groupe d'alimentation (142) des produits (P) à enrober et à un groupe d'extraction (144) des produits (P) à enrober, et où au moins un groupe parmi ledit groupe d'alimentation (142) et ledit groupe d'extraction (144) peut être sélectivement éloigné de la machine afin de permettre de remplacer un groupe transporteur (14) utilisé pour une première matière de revêtement par un groupe transporteur (14') pouvant être utilisé avec une deuxième matière de revêtement, différente de ladite première matière de revêtement.

11. Machine à enrober selon l'une quelconque des revendications précédentes 6, 9 ou 10, dans laquelle la partie supérieure de la machine (10) peut être sélectivement montée pour permettre de remplacer un groupe de distribution (12) et/ou un groupe transporteur (14) utilisé pour une première matière de revêtement par un groupe de distribution (12') et/ou un groupe transporteur (14') pouvant être utilisé avec une deuxième matière de revêtement, différente de ladite première matière de revêtement.

12. Machine à enrober selon l'une quelconque des revendications précédentes, dans laquelle ledit groupe de distribution (12) est mobile sélectivement en hauteur et/ou horizontalement.

13. Machine à enrober selon l'une quelconque des revendications précédentes, dans laquelle ladite structure de type carrousel (16) porte des éléments de conditionnement thermique (1600) pour ladite pluralité de bacs (16a, 16b, 16c).

14. Machine à enrober selon la revendication 13, dans laquelle lesdits éléments de conditionnement thermique (1600) fonctionnent indépendamment sur les bacs (16a, 16b, 16c) de ladite pluralité.

15. Machine à enrober selon l'une quelconque des revendications précédentes 13 ou 14, dans laquelle lesdits éléments de conditionnement thermique (1600) sont des éléments thermoélectriques.
